(19) Europäisches Patentamt
European Patent Office
Office européen des brevets

(11) EP 4 013 820 B1

(12) **EUROPEAN PATENT SPECIFICATION**

(45) Date of publication and mention of the grant of the patent:
**05.04.2023 Bulletin 2023/14**

(21) Application number: **20734137.1**

(22) Date of filing: **17.06.2020**

(51) International Patent Classification (IPC):
***C08L 23/12*** *(2006.01)*

(52) Cooperative Patent Classification (CPC):
(C-Sets available)
**C08L 23/12;** C08L 2207/20; Y02W 30/62 (Cont.)

(86) International application number:
**PCT/EP2020/066818**

(87) International publication number:
**WO 2021/028100 (18.02.2021 Gazette 2021/07)**

(54) **UPGRADED RECYCLED POLYOLEFIN**

VEREDELTES RECYCELTES POLYOLEFIN

POLYOLÉFINE RECYCLÉE AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.08.2019 EP 19191459**

(43) Date of publication of application:
**22.06.2022 Bulletin 2022/25**

(73) Proprietor: **Borealis AG**
**1020 Vienna (AT)**

(72) Inventors:
- **KAHLEN, Susanne Margarete**
  **4021 Linz (AT)**
- **BRAUN, Hermann**
  **4021 Linz (AT)**
- **LIU, Yi**
  **4021 Linz (AT)**
- **ALBRECHT, Andreas**
  **4021 Linz (AT)**
- **HUBNER, Gerhard**
  **4021 Linz (AT)**

(74) Representative: **Maiwald GmbH**
**Elisenhof**
**Elisenstraße 3**
**80335 München (DE)**

(56) References cited:
**CN-A- 104 861 253** **CN-A- 107 501 718**
**CN-A- 107 501 719** **US-A1- 2011 254 204**

- **PRACELLA M ET AL: "COMPATIBILIZATION AND PROPERTIES OF POLY(ETHYLENE TEREPHTHALATE)/POLYETHYLENE BLENDS BASED ON RECYCLED MATERIALS", MACROMOLECULAR CHEMISTRY AND PHYSICS, WILEY-VCH VERLAG, WEINHEIM, DE, vol. 203, no. 12, 29 July 2002 (2002-07-29), pages 1473-1485, XP001185926, ISSN: 1022-1352, DOI: 10.1002/1521-3935(200207)203:10/11<1473::A ID-MACP1473>3.0.CO;2-4**

EP 4 013 820 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/12, C08L 23/06, C08L 51/06**

## Description

### Field of Invention

The present invention relates to upgraded recycled polyolefin composition, and to a process for obtaining such upgraded recycled polyolefin compositions.

### Background

Polyolefins, in particular polyethylene and polypropylene are increasingly consumed in large amounts in a wide range of applications, including packaging for food and other goods, fibres, automotive components, and a great variety of manufactured articles. Polyethylene based materials are a particular problem as these materials are extensively used in packaging. Taking into account the huge amount of waste collected compared to the amount of waste recycled back into the stream, there is still a great potential for intelligent reuse of plastic waste streams and for mechanical recycling of plastic wastes. Generally, recycled quantities of polypropylene on the market are mixtures of both polypropylene (PP) and polyethylene (PE), this is especially true for post-consumer waste streams. Moreover, commercial recyclates from post-consumer waste sources are conventionally cross-contaminated with non-polyolefin materials such as polyethylene terephthalate, polyamide, polystyrene or non-polymeric substances like wood, paper, glass or aluminium. These crosscontaminations drastically limit final applications of recycling streams such that no profitable final uses remain.

If PET, in the form of bottles, is properly separated, postconsumer waste contains mostly various polyolefins (high density, low density and linear low-density polyethylenes and polypropylene including also copolymers thereof) and polystyrene (neat, high-impact and foamed). Fortelny et al have suggested combined EPDM-SBS compatibilizers on the basis of model systems including 10 wt.-% PS. In another study, R. M. C. Santana and S. Manrich have suggested the use of copolymer poly(styrene-b-ethylene-co-butylene-b-styrene) (SEBS) as compatibilizer for blends of PP and IPS in weight ratios of up to 6:1. They found SEBS reduces the diameter of HIPS dispersed particles and a concentration of 5 wt.-% of SEBS was found to be beneficial. S. E. Luzuriaga, J. Kovarova, and I. Fortelny studied the effect of SEBS/EPR compatibilizers at PE/PP/PS/HIPS systems. It is further known from A.A. Dewole that graft copolymers of polypropylene and polystyrene (PP-g-PS) have limited impact resistance and require rubber toughening agents such as EPR or styrene-b-ethylene-alt-butylene-b-styrene (SEBS) triblock copolymer, in a downstream compounding operation. G. Radonjic, V. Musil and I. Smit further found compatibilizing effects of the triblock copolymer poly(styrene-b-butadiene-b-styrene) (SBS) on the morphology and mechanical properties of polypropylene/polystyrene (PP/PS) blends. In yet a further study N. Equiza, W. Yave, R. Quijada, M. Yazdani-Pedram have dealt with compatibilization of PE/PP/PS/HIPS blends by use of SEBS/EPR compatibilizers.

It is known from AKOVALI, Güneri, et al. (Hg.). Frontiers in the science and technology of polymer recycling. Springer Science & Business Media, 2013 that PPg-PS having a content of 4% styrene when used as a compatibilizer for a recycling PP-PS blend result in either maintenance or deterioration of impact strength and tensile strength.

It is further known from KARIAN, Harutun (Hg.). Handbook of polypropylene and polypropylene composites, revised and expanded. CRC press, 2003 that grade Hivalloy, a styrenic product, having allegedly 10% grafted polystyrene, was a potential compatibilizer for polyolefins, polystyrene and PET recycling streams. However, due to various problems with Hivalloy, the resin was taken from the market. However, most studies that have dealt with relatively high PS and/or HIPS content in the streams to be recycled, whereby valid conclusions are impossible. Contents of styrene units such as of 10 wt.-% or higher result in completely different properties profile. Moreover, high contents of styrene can be better addressed via mechanical separation when producing the recyclate to be upgraded.

There was a long felt need for upgrading blends of polypropylene, polyethylene further containing low amounts of polystyrene, such as amounts of 1 to 5 wt.-% as occurring in high quality polyolefin recycling streams. There was further a long felt need for providing an alternative for polystyrene-b-poly(ethylene/propylene)-b-styrene (SEPS) compatibilizers. In yet a further aspect there was a need for avoiding rubber toughening by EPR or SEBS. Moreover, previously employed compatibilizers have addressed impact strength of recyclates but had to be used in amounts leading to a reduction of stiffness. The present invention at least in part addresses these and related objects.

### Summary of the Invention

The present invention is based on the finding that recycling blend comprising low amounts of polystyrene, such as 0.5 to 5.0 wt.-%, can be upgraded surprisingly well by blending 0.3 to 4.0 wt.-% of a styrene-grafted polypropylene having a melt flow rate (ISO 1133, 2.16 kg, 190°C) of 4.0 to 20 g/10min, and a specific styrene distribution characterized by three fractions when being subjected to preparative Temperature Rising Elution Fractionation (p-TREF) using TCB as eluent, in amounts of

| | |
|---|---|
| fraction (i) eluting up to 50°C | 5 to 15 wt.-% |
| fraction (ii) eluting from 50°C to 105°C | 5 to 15 wt.-% and |
| fraction (iii) eluting above 105°C | 70 to 90 wt.-%, |

whereby
fraction (i) has a polystyrene content as determined by $^1H$ NMR in an amount of 50 to 70 wt.-%;
and whereby
fraction (ii) has a polystyrene content as determined by $^1H$ NMR in an amount of 1 to 10 wt.-%;
and whereby
fraction (iii) has a polystyrene content as determined by $^1H$ NMR in an amount of less than 5 wt.-%;
and whereby
the total polystyrene content as determined by $^1H$ NMR of fractions (i) to (iii) is from 6 to 14 wt.-%.

The present invention insofar provides
a polyolefin composition obtainable by blending
a) 96.0 to 99.7 wt.-% of a blend (A) comprising polypropylene, polyethylene, polystyrene, and limonene, having

A-1) a content of isotactic polypropylene of 30 - 70 wt.-%,
A-2) a content of ethylene derived from polyethylene and ethylene containing copolymers of 20 - 50 wt.-%,
A-3) 0.5 to 5.0 wt.-% of polystyrene,
A-4) 0 to 3.0 wt.-% stabilizers,
A-5) 0 to 4.0 wt.-% polyamide-6,
A-6) 0 to 3.0 wt.-% talc,
A-7) 0 to 3.0 wt.-% chalk,
A-8) 0 to 1.0 wt.-% paper,
A-9) 0 to 1.0 wt.-% wood,
A-10) 0 to 0.5 wt.-% metal,
A-11) 0.1 ppm to 100 ppm of limonene as determined by using solid phase microextraction (HS-SPME-GC-MS),
A-12) 0 to 200 ppm total fatty acid content as determined by using solid phase microextraction (HS-SPME-GC-MS)
wherein all amounts are given with respect to the total weight of blend (A),
wherein blend (A) is a recycled material, which is recovered from a waste plastic material derived from post-consumer and/or post-industrial waste; and wherein blend (A) has a melt flow rate (ISO 1133, 2.16 kg, 230°C) of 4.0 to 20 g/10min;
and

b) 0.3 to 4.0 wt.-% of a compatibilizer (B)
being a styrene-grafted polypropylene having
a melt flow rate (ISO 1133, 2.16 kg, 190°C) of 4.0 to 20 g/10min, and three fractions when being subjected to preparative Temperature Rising Elution Fractionation (p-TREF) using TCB as eluent, in amounts of

| | |
|---|---|
| fraction (i) eluting up to 50°C | 5 to 15 wt% |
| fraction (ii) eluting from 50°C to 105°C | 5 to 15 wt% and |
| fraction (iii) eluting above 105°C | 70 to 90 wt%, |

whereby
fraction (i) has a polystyrene content as determined by $^1H$ NMR in an amount of 50 to 70 wt%;
and whereby
fraction (ii) has a polystyrene content as determined by $^1H$ NMR in an amount of 1 to 10 wt%%;
and whereby
fraction (iii) has a polystyrene content as determined by $^1H$ NMR in an amount of less than 5 wt%, and whereby
the total polystyrene content as determined by $^1H$ NMR of fractions (i) to (iii) is from 6 to 14 wt%,
whereby the polyolefin composition has a tensile modulus of at least 850 MPa (ISO 527-1,2) when measured on an injection molded test specimen.

The present invention is further directed to an article comprising the polyolefin composition according to the present invention.

In a further aspect, the present invention is concerned with a process for providing a polyolefin composition according to the present invention, the process comprising the steps of:

a) providing the blend (A) in an amount of 96.0 to 99.7 wt.-%, based on the overall weight of the polyolefin composition
b) providing the compatibilizer (B) in an amount of 0.3 to 4.0 wt.-%, based on the overall weight of the polyolefin composition
c) melting and mixing the blend of blend (A) and the compatibilizer (B) in an extruder, and
d) optionally pelletizing the obtained polyolefin composition.

In a yet a further aspect, the present invention is concerned with the use of a compatibilizer (B) being a styrene-grafted polypropylene having
a) a melt flow rate (ISO 1133, 2.16 kg, 190°C) of 4.0 to 20 g/10min, and
b) three fractions when being subjected to preparative Temperature Rising Elution Fractionation (p-TREF) with TCB as eluent, in amounts of

| | |
|---|---|
| fraction (i) eluting up to 50°C | 5 to 15 wt.-% |
| fraction (ii) eluting from 50°C to 105°C | 5 to 15 wt.-% and |
| fraction (iii) eluting above 105°C | 70 to 90 wt.-%, |

whereby

fraction (i) has a polystyrene content as determined by $^1$H NMR in an amount of 50 to 70 wt%;
and whereby
fraction (ii) has a polystyrene content as determined by $^1$H NMR in an amount of 1 to 10 wt%;
and whereby
fraction (iii) has a polystyrene content as determined by $^1$H NMR in an amount of less than 5 wt%, and whereby the total polystyrene content as determined by $^1$H NMR of fractions (i) to (iii) is from 6 to 14 wt-%,
for blending with of a blend (A) comprising polypropylene, polyethylene, polystyrene, and limonene, having

A-1) a content of isotactic polypropylene of 30 - 70 wt.-%,
A-2) a content of ethylene derived from polyethylene and ethylene containing copolymers of 20 - 50 wt.-%,
A-3) 0.5 to 5.0 wt.-% of polystyrene,
A-4) 0 to 3.0 wt.-% stabilizers,
A-5) 0 to 4.0 wt.-% polyamide-6,
A-6) 0 to 3.0 wt.-% talc,
A-7) 0 to 3.0 wt.-% chalk,
A-8) 0 to 1.0 wt.-% paper,
A-9) 0 to 1.0 wt.-% wood,
A-10) 0 to 0.5 wt.-% metal,
A-11) 0.1 ppm to 100 ppm of limonene as determined by using solid phase microextraction (HS-SPME-GC-MS), and
A-12) 0 to 200 ppm total fatty acid content using solid phase microextraction (HS-SPME-GC-MS)

wherein all amounts are given with respect to the total weight of blend (A)
wherein blend (A) is a recycled material, which is recovered from a waste plastic material derived from post-consumer and/or post-industrial waste; and wherein blend (A) has a melt flow rate (ISO 1133, 2.16 kg, 230°C) of 4 to 20 g/10min, to obtain a polyolefin composition having a tensile modulus of at least 850 MPa (ISO 527-1,2) and a Charpy Impact Strength (ISO 179-1; 1 eA, 23°C) of more than 6.0 kJ/m$^2$ and up to 10.0 kJ/m$^2$.

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.
Unless clearly indicated otherwise, use of the terms "a," "an," and the like refers to one or more.
For the purposes of the present description and of the subsequent claims, the term "recycled waste" is used to indicate a material recovered from both post-consumer waste and industrial waste, as opposed to virgin polymers.

Post-consumer waste refers to objects having completed at least a first use cycle (or life cycle), i.e. having already served their first purpose; while industrial waste refers to manufacturing scrap, which does not normally reach a consumer.

The term "virgin" denotes the newly produced materials and/or objects prior to their first use, which have not already been recycled.

Many different kinds of polyethylene or polypropylene can be present in "recycled waste". Blend (A) according to the present invention includes at least polypropylene, polyethylene, polystyrene, limonene and fatty acids.

Blend (A) is further characterized by a content of isotactic polypropylene of 30 - 70 wt.-%.

Blend (A) is further characterized by a content of ethylene derived from polyethylene and ethylene containing copolymers of 20 - 50 wt.-%. Polyethylene denotes any of the conventional polyethylenes such as LDPE, LLDPE, MDPE, and HDPE. Ethylene containing copolymers are extremely widespread and may include for example ethylene propylene copolymers such as ethylene propylene rubber, plastomers such as $C_2C_8$ rubbers, and countless other polymers including ethylenederived units.

The amount of 0 to 4.0 wt.-% polyamide-6 is further a realistic measurement of the total amount of units derived from amides considering the common and widespread use of polyamide-6 resulting in an acceptable error margin.

The term "recycled material" such as used herein denotes materials reprocessed from "recycled waste".

A polymer blend denotes a mixture of several polymeric components.

In general, blend (A) can be prepared by mixing the two or more polymeric streams as well known in the art.

A "compatibilizer" is a substance in polymer chemistry, which is added to a blend of polymers having limited miscibility in order to improve the mechanical properties thereof.

If not indicated otherwise "%" refers to weight-%.

## Detailed Description

### Blend (A)

The polyethylene-polypropylene composition according to the present invention comprises from 96 to 99.7 wt.-% of blend (A). It is the essence of the present invention that blend (A) is obtained from a recycled waste stream. Blend (A) can be either recycled post-consumer waste- or industrial waste, such as for example from the automobile industry, or alternatively, a combination of both.

It is particularly preferred that blend (A) consists of recycled post-consumer waste and/or industrial waste.

Preferably, blend (A) is obtained from recycled waste by means of plastic recycling processes known in the art. Such recyclates are commercially available, e.g. from Corepla (Italian Consortium for the collection, recovery, recycling of packaging plastic wastes), Resource Plastics Corp. (Brampton, ON), Kruschitz GmbH, Plastics and Recycling (AT), Vogt Plastik GmbH (DE), Mtm Plastics GmbH (DE) etc. Nonexhaustive examples of polyethylene rich recycled materials include: DIPOLEN S (Mtm Plastics GmbH), food grade rHDPE (BIFFA PLC) and a range of polyethylene rich materials, such as e.g. HD-LM02041 from PLASgran Ltd.

In a certain preferred embodiment, the recycled polyethylene rich material is DIPOLEN (Mtm Plastics GmbH), such as DIPOLEN S or DIPOLEN H, preferably DIPOLEN S. DIPOLEN is obtained from domestic waste streams (i.e. it is a product of domestic recycling) for example the "yellow bag" recycling system, which operates in some parts of Germany.

Blend (A) comprises the following components:

A-1) a content of isotactic polypropylene of 30 - 70 wt.-%,
A-2) a content of ethylene derived from polyethylene and ethylene containing copolymers of 20 - 50 wt.-%,
A-3) 0.5 to 5.0 wt.-% of polystyrene,
A-4) 0 to 3.0 wt.-% stabilizers,
A-5) 0 to 4.0 wt.-% polyamide,
A-6) 0 to 3.0 wt.-% talc,
A-7) 0 to 3.0 wt.-% chalk,
A-8) 0 to 1.0 wt.-% paper,
A-9) 0 to 1.0 wt.-% wood, and
A-10) 0 to 0.5 wt.-% metal, and
A-11) 0.1 ppm to 100 ppm of limonene as determined by using solid phase microextraction (HS-SPME-GC-MS)
A-12) 0 to 200 ppm total fatty acid content as determined by using solid phase microextraction (HS-SPME-GC-MS)
wherein all amounts are given with respect to the total weight of blend (A),

Blend (A) preferably may have a a content of ethylene derived from polyethylene and ethylene containing copolymers of greater than 35 wt.-%, more preferably greater than 40 wt.-% with respect to the total weight of blend (A).

In addition, blend (A) usually has a content of isotactic polypropylene of greater than 30 wt.-%, but less than 70 wt.-%, with respect to the total weight of blend (A), preferably may have content of isotactic polypropylene of greater than 40 wt.-%, but less than 65 wt.-%, with respect to the total weight of blend (A).

Blend (A) may also have a relative amount of polystyrene of between 0.5 and 5.0 wt.%, preferably between 1.0 and 4.0 wt.-%, more preferably between 1.0 and 3.0 wt.%, most preferably between 1.5 and 2.5 wt.-%.

The polyethylene of the recycled material typically includes recycled high-density polyethylene (rHDPE), recycled medium-density polyethylene (rMDPE), recycled low-density polyethylene (rLDPE) and the mixtures thereof.

In a certain embodiment, the polyethylene is high density PE with an average density of greater than 0.8 g/cm$^3$, preferably greater than 0.9 g/cm$^3$, most preferably greater than 0.91 g/cm$^3$.

According to the present invention, blend (A) has a content of limonene as determined using solid phase microextraction (HS-SPME-GC-MS) of 0.1 ppm to 50 ppm, more preferably from 0.1 ppm to 30 ppm, most preferably from 0.1 ppm to 10 ppm.

Limonene is conventionally found in recycled polyolefin materials and originates from packaging applications in the field of cosmetics, detergents, shampoos and similar products. Therefore, blend (A) contains limonene, when blend (A) contains material that originates from such types of domestic waste streams.

Lower amounts of the preferred ranges such a mentioned above, i.e. 0.1 ppm to 50 ppm, more preferred range from 0.1 ppm to 30 ppm, and most preferred range from 0.1 ppm to 10 ppm are easily accessible by aeration and/or by washing, preferable by aeration and repeated washing.

The fatty acid content is yet another indication of the recycling origin of blend (A). However, in some cases, the fatty acid content may be below the detection limit due to specific treatments in the recycling process. According to the present invention, blend (A) preferably has a content of fatty acids as determined using solid phase microextraction (HS-SPME-GC-MS) of from 1 ppm to 200 ppm, preferably from 1 ppm to 150 ppm, more preferably from 2 ppm to 100 ppm, most preferably from 3 ppm to 80 ppm.

Due to the recycling origin blend (A) may also contain:

- organic fillers, and/or
- inorganic fillers, and/or
- additives

in amounts of up to 3 wt.-% with respect to the weight of blend (A).

According to the present invention, blend (A) has a melt flow rate (ISO 1133, 2.16 kg, 230°C) of 4 to 20 g/10min, preferably of 5 to 15 g/10min, more preferably of 6 to 12 g/10min.

As stated above blend (A) may include one or more further components, selected from:

A-4) up to 3.0 wt.-% stabilizers, preferably up to 2.0 wt.-% stabilizers,
A-5) up to 4.0 wt.-% polyamide-6, preferably up to 2.0 wt.-% polyamide-6,
A-6) up to 3.0 wt.-% talc, preferably up to 1.0 wt.-% talc,
A-7) up to 3.0 wt.-% chalk, preferably up to1.0 wt.-% chalk,
A-8) up to 1.0 wt.-% paper, preferably up to 0.5 wt.-% paper,
A-9) up to 1.0 wt.-% wood, preferably up to 0.5 wt.-% wood, and
A-10) up to 0.5 wt.-% metal, preferably up to 0.1 wt.-% metal,
based on the overall weight of blend (A).

It is needless to say, during recycling usually any reasonable measure will be taken for lowering polyamides, talc, chalk, paper, wood and metal as far as final application or use suggests such measure.

**Compatibilizer (B)**

The polyolefin composition of the invention comprises 0.3 to 4.0 wt.-% of a compatibilizer (B), being a styrene-grafted polypropylene with respect to the total of the polyolefin composition. In a preferred embodiment the amount of compatibilizer (B) is 0.4 to 3.5 wt.-% with respect to the total of the polyolefin composition.

The term 'styrene-grafted' has a well-known meaning in the art.

The styrene-grafted polypropylene compatibilizer (B) has a melt flow rate (ISO 1133, 2.16 kg, 190°C) of 4 to 20 g/10 min, preferably of 6 to 18 g/10min, more preferably of 8 to 16 g/10min.
and
three fractions when being subjected to to preparative Temperature Rising Elution Fractionation (p-TREF) TCB as eluent, in amounts of

| | |
|---|---|
| fraction (i) eluting up to 50°C | 5 to 15 wt.-% |
| fraction (ii) eluting from 50°C to 105°C | 5 to 15 wt.-% and |
| fraction (iii) eluting above 105°C | 70 to 90 wt.-%, |

whereby
fraction (i) has a polystyrene content as determined by $^1$H NMR in an amount of 50 to 70 wt-%;
and whereby
fraction (ii) has a polystyrene content as determined by $^1$H NMR in an amount of 1 to 10 wt-%;
and whereby
fraction (iii) has a polystyrene content as determined by $^1$H NMR in an amount of less than 5 wt-%, and whereby
the total polystyrene content as determined by $^1$H NMRof fractions (i) to (iii) is from 6 to 14 wt.-%,

The fractions (i) to (iii) of compatibilizer (B) preferably fulfill the following one or more criteria:

isotacticity of 30 to 60 mmmm% $^{13}$CNMR in fraction (i) eluting up to 50°C
and/or
isotacticity of 70 to 90 mmmm% $^{13}$CNMR in fraction (ii) eluting from 50°C to 105°C and/or
isotacticity of 90 to 99 mmmm% $^{13}$CNMR in fraction (iii) eluting above 105°C.

Even more preferred the fractions (i) to (iii) of compatibilizer (B) fulfill the following one or more criteria:

isotacticity of 40 to 60 mmmm% $^{13}$CNMR in fraction (i) eluting up to 50°C
and/or
isotacticity of 70 to 90 mmmm% $^{13}$CNMR in fraction (ii) eluting from 50°C to 105°C and/or
isotacticity of 95 to 99 mmmm% $^{13}$CNMR in fraction (iii) eluting above 105°C.

Without wishing to be bond by theory it is believed the high amount of the fraction eluting above 105°C and further, in an preferred embodiment, the high isotacticity of said fractions is responsible for the high stiffness of the resulting upgraded composition.

Further preferred is an embodiment in which the styrene-grafted polypropylene compatibilizer (B) has a melt flow rate (ISO 1133, 2.16 kg, 190°C) of 8 to 16 g/10 min, a total polystyrene content as determined by 1H NMR of fractions (i) to (iii) of 8 to 12 wt.-% as determined by 1H NMR.

The preparation of the compatibilizer (B) can be done as described in SUN, Yi-Jun, et al. In situ compatibilization of polyolefin and polystyrene using Friedel-Crafts alkylation through reactive extrusion. Polymer, 1998, 39. Jg., Nr. 11, S. 2201-2208.

Commercial compatibilizers (B) fulfilling the requirements of the present invention are also available with the most prominent resin being Byk Kometra SCONA TPPP 1616 FA. A person skilled in the art will understand that existing commercial grades may be further modified for the present invention.

**Polyolefin composition**

The polyolefin composition of the invention is obtainable by blending

a) 96.0 to 99.7 wt.-% of of a blend (A) comprising polypropylene, polyethylene, polystyrene, and limonene, having

A-1) a content of isotactic polypropylene of 30 - 70 wt.-%,
A-2) a content of ethylene derived from polyethylene and ethylene containing copolymers of 20 - 50 wt.-%,
A-3) 0.5 to 5.0 wt.-% of polystyrene,
A-4) 0 to 3.0 wt.-% stabilizers,
A-5) 0 to 4.0 wt.-% polyamide-6,
A-6) 0 to 3.0 wt.-% talc,
A-7) 0 to 3.0 wt.-% chalk,
A-8) 0 to 1.0 wt.-% paper,
A-9) 0 to 1.0 wt.-% wood,
A-10) 0 to 0.5 wt.-% metal,
A-11) 0.1 ppm to 100 ppm of limonene as determined by using solid phase microextraction (HS-SPME-GC-MS), and

A-12) 0 to 200 ppm total fatty acid content by using solid phase microextraction (HS-SPME-GC-MS) wherein all amounts are given with respect to the total weight of blend (A),

wherein blend (A) is a recycled material, which is recovered from a waste plastic material derived from post-consumer and/or post-industrial waste; and
wherein blend (A) has a melt flow rate (ISO 1133, 2.16 kg, 230°C) of 4.0 to 20.0 g/10min;
and

b) 0.3 to 4.0 wt.-% of a compatibilizer (B)

wherein blend (A) and compatibilizer (B) are as described in the above sections.

The inventive polyolefin composition may have a melt flow rate (ISO 1133, 2.16 kg, 230°C) of between 3.0 and 10.0 g/10min, preferably between 4.0 and 8.0 g/10min, more preferably between 4.0 and 7.0 g/10min, and still further preferably between 4.5 and 6.0 g/10 min.

As outlined above, it is appreciated that the polyolefin composition according to the invention features a good impact strength without compromising the stiffness reflected by the tensile modulus of at least 850 MPa (ISO 527-1,2) when measured on an injection molded test specimen .

Accordingly, it is preferred that the polyolefin composition of the invention has a Charpy Impact Strength (ISO 179-1; 1eA, 23°C) of more than 6.0 $kJ/m^2$ and up to 10 $kJ/m^2$, preferably of more than 6.2 $kJ/m^2$ and up to 10 $kJ/m^2$, more preferably of more than 6.4 $kJ/m^2$ and up to 10 $kJ/m^2$. Usually the Charpy Impact Strength (ISO 179-1; 1eA, 23°C) will not be higher than 10.0 $kJ/m^2$ and in some embodiments even not higher than 9 $kJ/m^2$.

Additionally, the inventive polyolefin composition has a tensile modulus of at least 850 MPa (ISO 527-1,2) when measured on an injection molded test specimen, preferably of at least 880 MPa, more preferably of at least 900 MPa, still more preferably of at least 920 MPa, further preferably 940 MPa and most preferably of at least 950 MPa. Usually the tensile modulus (ISO 527-1,2) of the inventive polyolefin composition when measured on an injection molded test specimen will not be higher than 1200 MPa.

In one embodiment, the inventive polyolefin composition is characterized by at least one, preferably all, of the following features:

a) a melt flow rate (ISO 1133, 2.16 kg, 230°C) of between 3.0 and 10.0 g/10min, preferably between 4.0 and 8.0 g/10min, more preferably between 4.0 and 7.0 g/10min, and still further preferably between 4.5 and 6.0 g/10 min
b) a tensile modulus of at least 850 MPa (ISO 527-1,2) when measured on an injection molded test specimen, preferably of at least 920 MPa, more preferably of at least 940 MPa, and most preferably of at least 950 MPa
c) a Charpy Impact Strength (ISO 179-1; 1eA, 23°C) of more than 6.0 $kJ/m^2$ and up to 10 $kJ/m^2$, preferably of more than 6.2 $kJ/m^2$ and up to 10 $kJ/m^2$, more preferably of more than 6.4 $kJ/m^2$ and up to 10 $kJ/m^2$.

In a further embodiment, the ratio of the melt flow rate (ISO 1133, 2.16 kg, 190°C) of the compatibilizer (B) to the melt flow rate of the blend (A) (ISO 1133, 2.16 kg, 230°C) MFR(B, (ISO 1133, 2.16 kg, 190°C) / MFR (A, ISO 1133, 2.16 kg, 230°C) is in the range of 0.5 to 2.0.

**Stabilizers**

As described above, the polyolefin composition, and more preferably the blend (A), can and usually will comprise stabilizers. These stabilizers are typically compounds such as antioxidants, anti-acids, anti-blocking agents, anti-UVs, nucleating agents and anti-static agents.

Examples of antioxidants which are commonly used in the art are sterically hindered phenols (such as CAS No. 6683-19-8, also sold as Irganox 1010 FF™ by BASF), phosphorous based antioxidants (such as CAS No. 31570-04-4, also sold as Hostanox PAR 24 (FF)™ by Clariant, or Irgafos 168 (FF)TM by BASF), sulphur based antioxidants (such as CAS No. 693- 36-7, sold as Irganox PS-802 FL™ by BASF), nitrogen-based antioxidants (such as 4,4'- bis(1,1'-dimethylbenzyl)diphenylamine), or antioxidant blends.

Anti-acids are also commonly known in the art. Examples are calcium stearates, sodium stearates, zinc stearates, magnesium and zinc oxides, synthetic hydrotalcite (e.g. SHT, CAS-No. 11097-59-9), lactates and lactylates, as well as calcium stearate (CAS No. 1592-23-0) and zinc stearate (CAS No. 557-05-1);

Common antiblocking agents are natural silica such as diatomaceous earth (such as CAS No. 60676-86-0 (SuperfFloss™), CAS-No. 60676-86-0 (SuperFloss E™), or CAS-No. 60676-86-0 (Celite 499™)), synthetic silica (such as CAS-No. 7631-86-9, CAS-No. 7631-86-9, CAS-No. 7631-86-9, CAS-No. 7631-86-9, CAS-No. 7631-86-9, CAS-No. 7631-86-9, CAS-No. 112926-00-8, CAS-No. 7631-86-9, or CAS-No. 7631-86-9), silicates (such as aluminium silicate (Kaolin) CAS-no. 1318-74-7, sodium aluminum silicate CAS-No. 1344-00-9, calcined kaolin CAS-No. 92704-41-1, aluminum silicate CAS-No. 1327-36-2, or calcium silicate CAS-No. 1344-95-2), synthetic zeolites (such as sodium calcium aluminosilicate hydrate CAS-No. 1344-01-0, CAS-No. 1344-01-0, or sodium calcium aluminosilicate, hydrate CAS-No. 1344-01-0).

Anti-UVs are, for example, Bis-(2,2,6,6-tetramethyl-4-piperidyl)-sebacate (CAS -No. 52829-07-9, Tinuvin 770); 2-hydroxy-4-n-°Ctoxy-benzophenone (CAS-No. 1843-05-6, Chimassorb 81).

Nucleating agents like sodium benzoate (CAS No. 532-32-1); 1,3:2,4-bis(3,4-dimethylbenzylidene)sorbitol (CAS 135861-56-2, Millad 3988) can be contained.

Suitable antistatic agents are, for example, glycerol esters (CAS No. 97593-29-8) or ethoxylated amines (CAS No. 71786-60-2 or 61791-31-9) or ethoxylated amides (CAS No. 204-393-1).

**Article**

The present application is further directed to an article comprising the polyolefin composition as described above.

All preferred aspects and embodiments as described above shall also hold for the article.

**Process**

The process according to the present invention for preparing the polyolefin composition, comprises the steps of

a) providing the blend (A) as described herein in an amount of 96.0 to 99.7 wt.%, based on the overall weight of the polyolefin composition
b) providing the compatibilizer (B) as described herein in an amount of 0.3 to 4.0 wt.-%, based on the overall weight of the polyolefin composition
c) melting and mixing the blend of blend (A) and the compatibilizer (B) in an extruder, and
d) optionally pelletizing the obtained polyolefin composition.

All preferred aspects and embodiments as described above shall also hold for the process.

**Use of compatibilizer (B)**

The present invention is further directed to the use of a compatibilizer (B) being a styrene-grafted polypropylene having
a) a melt flow rate (ISO 1133, 2.16 kg, 190°C) of 4.0 to 20.0 g/10min, and
b) three fractions when being subjected to to preparative Temperature Rising Elution Fractionation (p-TREF) using TCB as eluent, in amounts of

| | |
|---|---|
| fraction (i) eluting up to 50°C | 5 to 15 wt.-%, and |
| fraction (ii) eluting from 50°C to 105°C | 5 to 15 wt.-% and |
| fraction (iii) eluting above 105°C | 70 to 90 wt.-%, |

whereby

fraction (i) has a polystyrene content as determined by $^1$H NMR in an amount of 50 to 70 wt-%;
and whereby
fraction (ii) has a polystyrene content as determined by $^1$H NMR in an amount of 1 to 10 wt-%;
and whereby
fraction (iii) has a polystyrene content as determined by $^1$H NMR in an amount of less than 5 wt-%, and whereby the total polystyrene content as determined by $^1$H NMR of fractions (i) to (iii) is from 6 to 14 wt.-%,

for blending with of a blend (A) comprising polypropylene, polyethylene, polystyrene, and limonene, having

A-1) a content of isotactic polypropylene of 30 - 70 wt.-%,
A-2) a content of ethylene derived from polyethylene and ethylene containing copolymers of 20 - 50 wt.-%,
A-3) 0.5 to 5.0 wt.-% of polystyrene,
A-4) 0 to 3.0 wt.-% stabilizers,
A-5) 0 to 4.0 wt.-% polyamide-6,
A-6) 0 to 3.0 wt.-% talc,

A-7) 0 to 3.0 wt.-% chalk,
A-8) 0 to 1.0 wt.-% paper,
A-9) 0 to 1.0 wt.-% wood,
A-10) 0 to 0.5 wt.-% metal,
A-11) 0.1 ppm to 100 ppm of limonene as determined by using solid phase microextraction (HS-SPME-GC-MS), and
A-12) 0 to 200 ppm total fatty acid content as determined using solid phase microextraction (HS-SPME-GC-MS) wherein all amounts are given with respect to the total weight of blend (A)

wherein blend (A) is a recycled material, which is recovered from a waste plastic material derived from post-consumer and/or post-industrial waste; and wherein blend (A) has a melt flow rate (ISO 1133, 2.16 kg, 230°C) of 4.0 to 20.0 g/10min,
to obtain an upgraded polyolefin composition, preferably an upgraded polyolefin composition having a tensile modulus of at least 850 MPa (ISO 527-1,2) and a Charpy Impact Strength (ISO 179-1; 1eA, 23°C) of more than 6.0 $kJ/m^2$ and up to 10 $kJ/m^2$.

All preferred aspects, definitions and embodiments as described above shall also hold for the use.

**Experimental Section**

The following Examples are included to demonstrate certain aspects and embodiments of the invention as described in the claims. It should be appreciated by those of skill in the art, however, that the following description is illustrative only and should not be taken in any way as a restriction of the invention.

Test Methods

**a) Amount of iPP, Polystyrene, Content of ethylene (and ethylene containing copolymers) and Amount of Polyamide-6**

To establish different calibration curves iPP and HDPE and iPP, PS and PA6 were blended. For the quantification of the content of the foreign polymers, IR spectra were recorded in the solid-state using a Bruker Vertex 70 FTIR spectrometer. Films were prepared with a compression-moulding device at 190 °C with 4-6 MPa clamping force. The thickness of the films for the calibration standards for iPP and HDPE was 300 $\mu$m and for the quantification of the iPP, PS and PA 6 50-100 $\mu$m film thickness was used. Standard transmission FTIR spectroscopy is employed using a spectral range of 4000-400 $cm^{-1}$, an aperture of 6 mm, a spectral resolution of 2 $cm^{-1}$, 16 background scans, 16 spectrum scans, an interferogram zero filling factor of 32 and Norton Beer strong apodisation.

The absorption of the band at 1167 $cm^{-1}$ in iPP is measured and the iPP content is quantified according to a calibration curve (absorption/thickness in cm versus iPP content in weight %).

The absorption of the band at 1601 $cm^{-1}$ (PS) and 3300 $cm^{-1}$ (PA6) are measured and the PS and PA6 content quantified according to the calibration curve (absorption/thickness in cm versus PS and PA content in wt %). The content of polyethylene and ethylene containing copolymers is obtained by subtracting (iPP+PS+PA6) from 100, taking into account the content of non-polymeric impurities as determined in the methods below. The analysis is performed as a double determination.

**b) Amount of Talc and Chalk** were measured by Thermogravimetric Analysis (TGA); experiments were performed with a Perkin Elmer TGA 8000. Approximately 10-20 mg of material was placed in a platinum pan. The temperature was equilibrated at 50°C for 10 minutes, and afterwards raised to 950°C under nitrogen at a heating rate of 20 °C/min. The weight loss between ca. 550°C and 700°C (WCO2) was assigned to CO2 evolving from CaCO3, and therefore the chalk content was evaluated as:

$$\text{Chalk content} = 100/44 \times WCO2$$

Afterwards the temperature was lowered to 300°C at a cooling rate of 20 °C/min. Then the gas was switched to oxygen, and the temperature was raised again to 900°C. The weight loss in this step was assigned to carbon black (Wcb). Knowing the content of carbon black and chalk, the ash content excluding chalk and carbon black was calculated as:

$$\text{Ash content} = (\text{Ash residue}) - 56/44 \times WCO2 - Wcb$$

Where Ash residue is the weight% measured at 900°C in the first step conducted under nitrogen. The ash content is estimated to be the same as the talc content for the investigated recyclates.

**c) Amount of Paper, Wood**

Paper and wood were determined by conventional laboratory methods including milling, floatation, microscopy and Thermogravimetric Analysis (TGA).

**d) Amount of Metals** was determined by x ray fluorescence (XRF).

**e) Amount of Limonene** was determined by solid phase microextraction (HS-SPME-GC-MS).

Additional details are given below with respect to the specific sample.

**f) Amount of total fatty acids** was determined by solid phase microextraction (HS-SPME-GC-MS).

Additional details are given below with respect to the specific sample.

**g) Melt flow rates** were measured with a load of 2.16 kg ($MFR_2$) at 230 °C or 190°C as indicated. The melt flow rate is that quantity of polymer in grams which the test apparatus standardized to ISO 1133 extrudes within 10 minutes at a temperature of 230 °C (or 190°C) under a load of 2.16 kg.

**h) Crossfractionation Chromatography (CFC) for compatibilizer (B) (a-TREF x SEC analysis) for compatibilizer (B)**

The chemical composition distribution as well as the determination of the molecular weight distribution and the corresponded molecular weight averages (Mn, Mw and Mv) at a certain elution temperature (polymer crystallinity in solution) also can be determined by a fully automated Cross Fractionation Chromatography (CFC) as described by Ortin A., Monrabal B., Sancho-Tello J., Macromol. Symp., 2007, 257, 13-28.

A CFC instrument (PolymerChar, Valencia, Spain) was used to perform the crossfractionation chromatography (TREF x SEC). A four band IR5 infrared detector (PolymerChar, Valencia, Spain) was used to monitor the concentration. The polymer was dissolved at 160°C for 150 minutes at a concentration of around 1mg/ml.

To avoid injecting possible gels and polymers which do not dissolve in TCB at 160°C, like PET and PA, the weighed out sample was packed into stainless steel mesh MW 0,077/D 0,05mmm.

Once the sample was completely dissolved an aliquot of 0.5 ml was loaded into the TREF column and stabilized for 45 minutes at 110 °C. The polymer was crystallized and precipitate to a temperature of 35°C by applying a constant cooling rate of 0.2 °C/min. A discontinuous elution process was performed using the following temperature steps: (35, 40, 50, 60, 65, 70, 75, 80, 85, 90, 95, 100, 103, 106, 109, 112, 115, 117, 119, 121, 123, 125, 127, 130, 135 and 140).

In the second dimension, the GPC analysis, 3 PL Olexis columns and 1x Olexis Guard columns from Agilent (Church Stretton, UK) were used as stationary phase. As eluent 1,2,4-trichlorobenzene (TCB, stabilized with 250 mg/L 2,6-Di tert butyl-4-methylphenol) at 150 °C and a constant flow rate of 1 mL/min were applied. The column set was calibrated using universal calibration (according to ISO 16014-2:2003) with at least 15 narrow MWD polystyrene (PS) standards in the range of 0,5 kg/mol to 11 500 kg/mol. Following Mark Houwink constants were used to convert PS molecular weights into the PP molecular weight equivalents.

$$K_{PS} = 19 \times 10^{-3}\ \text{mL/g}, \quad \alpha_{PS} = 0.655$$

$$K_{PP} = 19 \times 10^{-3}\ \text{mL/g}, \quad \alpha_{PP} = 0.725$$

A third order polynomial fit was used to fit the calibration data. Data processing was performed using the software provided from PolymerChar with the CFC instrument.

**Calibration of Detector (Calibration of Composition Detector for the Determination of SCB/1000TC)**

The IR 5 detector provides different detector signals, which were designated as concentration signal (broad spectral band covering the spectral region from 2800 cm-1 to 3000 cm-1) , methyl (CH3) (narrow band filter centered at 2959 cm-1) and methylene (CH2) (centered at 2928 cm-1) signal. The ratio of the methyl to the methylene detector signals is correlating to the total amount of methylene (CH3) per 1000 carbon atoms (CH3/1000TC) (A. Ortin, B. Monrabal, J. Montesinos, P. del Hierro, Macromol. Symp. 2009, 282, 65-70). The determination of the CH3/1000TC using an IR5 detector can be performed by calibrating the CH3/CH2 ratio versus the nominal CH3/1000TC content. The nominal

CH3/1000TC content was obtained by 13C-NMR spectroscopy (as described further below). A linear fit was used for this purpose. The calibration set used for this method includes minimum 17 different short chain branched polyethylenes, including polyethylene-co-butene, polyethylene-co-hexene and polyethylene-co-octene covering an overall branching level up to 80 methyl groups per 1000 carbons (CH3/1000C). The short chain branching was determined as methyl branching per 1000 total carbons and might be corrected for up to 2 methyl chain end groups per polymer chain.

**Preparative Temperature Rising Elution Fractionation (p-TREF) for compatibilizer B**

The PP-g-PS polymer of the example (compatibilizer B) was separated according to its chemical composition distribution by preparative Temperature Rising Elution fractionation. The basics of this technique are described by Soares, J.B.P., Fractionation, In: Encyclopedia Of Polymer Science and Technology, John Wiley & Sons, New York, pp. 75-131, Vol. 10, 2001. The separations were generated using a PREP Mc2 instrument manufactured by PolymerChar S.A. (Valencia, Spain). To avoid injecting possible crosslinked polymers which do not dissolve in TCB at 160°C, the weight out sample was packed into stainless steel mesh (MW 0,077/D 0,05mmm). Approximately 500 mg of the polymer sample were dissolved in 200 mL 1,2,4-trichlorobenzene (TCB, stabilized with 250 mg/L 2,6-Di tert butyl-4-methylphenol) at 160 °C for 60 min. After dissolution the temperature was then rapidly cooled to 122°C and held at 122°C for 10 min for stabilization purpose. Later the temperature was slowly cooled to 40°C under a constant cooling rate (0.1 °C/min). Approximately 200 ml of polymer solution was collected at 50°C, 105°C and 140°C. The polymer was precipitated with around 500 ml cold Methanol (Temperature ~ 8°C). The TCB/Methanol solution was kept overnight in the refrigerator. The filtration step was performed on a vacuum assisted filtration station using a 5.0 μm polytetrafluoroethylene coated filter paper. The filtered fractions were dried over night at 60°C in a vacuum oven and weighted out before further testing.

**i) Quantification of microstructure by NMR spectroscopy (for compatibilizer (B); validation experiments)**

Quantitative nuclear-magnetic resonance (NMR) spectroscopy was used to quantify the polystyrene content of compatibilizer (B).

Quantitative $^{13}C\{^1H\}$ NMR spectra were recorded in the solution-state using a Bruker Avance III 400 NMR spectrometer operating at 400.15 and 100.62 MHz for $^1H$ and $^{13}C$ respectively. All spectra were recorded using a $^{13}C$ optimized 10 mm extended temperature probehead at 125°C using nitrogen gas for all pneumatics. Approximately 200 mg of material was dissolved in 3 ml of *1,2*-tetrachloroethane-$d_2$ (TCE-$d_2$) using Ditertiarybutylhydroxytoluen (BHT) (CAS 128-37-0) as stabilizer. Standard single-pulse excitation was employed utilizing a 30 degree pulse, a relaxation delay of 1s and 10 Hz sample rotation.

A total of 16 transients were acquired per spectra using 4 dummy scans. A total of 32k data points were collected per FID with a dwell time of 60 micro-seconds, which corresponds to a spectral window of approximately 20 ppm. The FID was then zero filled to 64k data points and an exponential window function applied with 0.3 Hz linebroadening.

Quantitative $^1H$ NMR were processed, integrated and quantitative properties determined. All chemical shifts were internally referenced to the residual protonated solvent signal at 5.95 ppm.

Characteristic signals corresponding to polystyrene and polypropylene were observed and contents calculated. Reference is made to BRANDOLINI, Anita J.; HILLS, Deborah D. NMR spectra of polymers and polymer additives. CRC press, 2000.

Characteristic signals resulting from the additional use of BHT as stabilizer were also observed. For the BHT compensation, the integral of the signal at 4.83 ppm assigned to the -OH site of BHT was used, accounting for the number of reporting nuclei per molecule.

$$BHT = I_{OH\text{-}BHT}$$

Characteristic signals resulting from polystyrene were observed and the content was quantified using the integral of the aromatic signals ($I_{aromatic}$) between 7.6 ppm and 6.3 ppm assigned to aromatic protons, accounting for the number of reporting nuclei per polystyrene.

Aromatic protons from BHT influencing integral region ($I_{aromatic}$) must be compensated for

$$PS = [\, I_{aromatic} - (2 * BHT)]/5$$

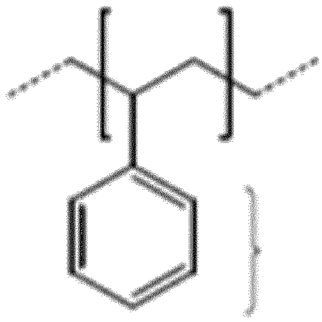

I aromatic

The propylene content was quantified using the integral of the propylene bulk aliphatic ($I_{bulk}$) signal between 0.00 to 3.00 ppm. This intergral included the aliphatic sites from polystyrene (CH and $CH_2$) and the aliphatic sites from BHT as well. The propylene content was calculated based on the bulk integral and compensated for aliphatic polystyrene signals and BHT, accounting for the number of reporting nuclei per polyproplyne.

$$PP = [ I_{bulk} - (18^* BHT) - (3^* BHT) - (3^*PS)]/6$$

The total mole fraction of polystyrene in the polymer was calculated

$$fPS = PS / (PS + PP)$$

The total PS content in mole percent was calculated from the mole fraction

$$PS [mole\%] = 100 * fPS$$

The total PS content in weight percent was calculated from the mole fraction

$$PS [wt\%] = 100^*(fPS^*104.15)/[(fPS^*104.15)^*((1-fPS)^*42.08)]$$

**j) Isotacticity**

Quantitative nuclear-magnetic resonance (NMR) spectroscopy was used to quantify the isotacticity and tacticity distribution. Quantitative $^{13}C\{^1H\}$ NMR spectra recorded in the solution-state using a Bruker Avance III 400 NMR spectrometer operating at 400.15 and 100.62 MHz for $^1H$ and $^{13}C$ respectively. All spectra were recorded using a $^{13}C$ optimised 10 mm selective excitation probehead at 125°C using nitrogen gas for all pneumatics. Ideally approximately 200 mg of material was dissolved in 1,2-tetrachloroethane-$d_2$ (TCE-$d_2$), if only less amount of material available (e.g. fractions) extended number of transients needed. This setup was chosen primarily for the high resolution needed for tacticity distribution quantification {busico01, busico97}. Standard single-pulse excitation was employed utilising the NOE and bilevel WALTZ16 decoupling scheme {zhou07, busico07}. A total of 6144 (6k) transients respectively 16384 (16k) for extended measurements were acquired per spectra. All chemical shifts are internally referenced to the methyl signal of the isotactic pentad mmmm at 21.85 ppm.

The tacticity distribution was quantified through integration of the methyl region between 23.6 and 19.7 ppm correcting for any sites not related to the stereo sequences of interest {busico01, busico97}.

The pentad tacticity distribution was determined through direct separate integration of each methyl signal from a given steric pentad followed by normalisation to the sum of methyl signals from all steric pentads. The relative content of a specific steric pentad was reported as the mole fraction or percentage of a given steric pentad xxxx with respect to all steric pentads:

$$[xxxx] = xxxx / (mmmm + mmmr + rmmr + mmrr + xmrx + mrmr + rrrr + mrrr + mrrm)$$

where xmrx represents the combined integral of both mmrm and rmrr as signal from these steric pentads are not

commonly resolved. The pentad isotacticity was thus given by:

$$[mmmm] = mmmm / (mmmm + mmmr + rmmr + mmrr + xmrx + mrmr + rrrr + mrrr + mrrm)$$

The triad tacticity distribution was indirectly determined from the pentad tacticity distribution using the known pentad-triad necessary relationships:

$$[mm] = [mmmm] + [mmmr] + [rmmr]$$

$$[mr] = [mmrr] + [xmrx] + [mrmr]$$

$$[rr] = [rrrr] + [mrrr] + [mrrm]$$

busico01:
Busico, V., Cipullo, R., Prog. Polym. Sci. 26 (2001) 443
busico97:
Busico, V., Cipullo, R., Monaco, G., Vacatello, M., Segre, A.L., Macromolecules 30 (1997) 6251
zhou07:
Zhou, Z., Kuemmerle, R., Qiu, X., Redwine, D., Cong, R., Taha, A., Baugh, D. Winniford, B., J. Mag. Reson. 187 (2007) 225
busico07:
Busico, V., Carbonniere, P., Cipullo, R., Pellecchia, R., Severn, J., Talarico, G., Macromol. Rapid Commun. 2007, 28, 1128

**k) Tensile modulus** was measured according to ISO 527-2 (cross head speed = 1 mm/min; test speed 50 mm/min at 23 °C) using compression moulded specimens as described in EN ISO 1873-2 (dog bone shape, 4 mm thickness). The measurement was done after 96 h conditioning time of the specimen.

**l) Impact strength** was determined as Charpy Notched Impact Strength according to ISO 179-1 eA at +23 °C on injection moulded specimens of 80 x 10 x 4 mm prepared according to EN ISO 1873-2. According to this standard samples are tested after 96 hours.

**Experiments**

A number of blends was produced with DIPOLEN S as blend (A), a polyethylene-polypropylene blend from Mtm Plastics GmbH, materials according to the August 2018 specifications.

| Dipolen S-sample | |
|---|---|
| Polypropylene | 59 wt.-% |
| Polyethylene | 33 wt.-% |
| Polystyrene | 2.3 wt.-% |
| Polyamide-6 | 2.9 wt.-% |
| Talc content | 0.4 wt.-% |
| Chalk content | 0.2 wt.-% |
| Paper content | < 1.0 wt.-% |
| Wood content | < 1.0 wt.-% |
| Metal content | < 0.2 wt.-% |
| Limonene content | 32 mg/kg |
| Total fatty acid content | 71 mg/kg |

Compatibilizer SCONA TPPP 1616 FA (a SEBS-g-PS, commercially available from Byk Kometra; Preparative

Temperature Rising Elution Fractionation (p-TREF) using TCB as eluent and analysis as described above)

| | |
|---|---|
| fraction (i) eluting up to 50°C | 10.2 wt.-% |
| fraction (ii) eluting from 50°C to 105°C | 9.5 wt.-% |
| fraction (iii) eluting above 105°C | 80.3 wt.-% |

whereby

fraction (i), polystyrene content as determined by $^1$H NMR : 59.6 wt-%;
fraction (ii), polystyrene content as determined by $^1$H NMR: 6.0 wt-%;
fraction (iii), polystyrene content as determined by $^1$H NMR: 1.9 wt-%,
the total polystyrene content by $^1$H NMR of fractions (i-iii): 8.3 wt-%

**Comparative example 1:**

For CE1, no compatibilizer was used, therefore the composition consists of DIPOLEN S.

**Comparative examples 2-4:**

For CE2 to CE4, the compatibilizer Queo 8207 (an ethylene based 1-octene plastomer, commercially available from Borealis AG) was used in amounts of 5 wt.-%, 10 wt.-%, and 20 wt.-% (In CE2, CE3 and CE4 respectively)

**Inventive examples:**

In each of the inventive examples IE1 to IE3, SCONA TPPP 1616 FA (a SEBS-g-PS, commercially available from Byk Kometra) was used as compatibilizer (B), in amounts disclosed in Table 3.

Additionally, inventive examples IE1 to IE3 contained Irganox B225F in 0.3 wt.-%, (See Table 3) as stabiliser.

The compositions were prepared via melt blending on a co-rotating twin screw extruder.

The polymer melt mixture was discharged and pelletized. For testing the mechanical properties, specimens were produced and tested according to ISO 179 with 1eA notched specimens to measure the Charpy notched impact strength and according to ISO 527-1/2 with 1A specimens to measure the tensile properties at room temperature.

**Limonene content in DIPOLEN - details**

Limonene quantification was carried out using solid phase microextraction (HS-SPME-GC-MS) by standard addition.

50 mg ground samples were weighed into 20 mL headspace vials and after the addition of limonene in different concentrations and a glass-coated magnetic stir bar, the vial was closed with a magnetic cap lined with silicone/PTFE. Micro capillaries (10 pL) were used to add diluted limonene standards of known concentrations to the sample. Addition of 0, 2, 20 and 100 ng equals 0 mg/kg, 0.1 mg/kg, 1mg/kg and 5 mg/kg limonene, in addition standard amounts of 6.6 mg/kg, 11 mg/kg and 16.5 mg/kg limonene were used in combination with some of the samples tested in this application. For quantification, ion-93 acquired in SIM mode was used. Enrichment of the volatile fraction was carried out by headspace solid phase microextraction with a 2 cm stable flex 50/30 pm DVB/Carboxen/PDMS fibre at 60°C for 20 minutes. Desorption was carried out directly in the heated injection port of a GCMS system at 270°C.

GCMS Parameters:

Column: 30 m HP 5 MS 0.25*0.25
Injector: Splitless with 0.75 mm SPME Liner, 270°C
Temperature program: -10°C (1 min)
Carrier gas: Helium 5.0, 31 cm/s linear velocity, constant flow
MS: Single quadrupole, direct interface, 280°C interface temperature
Acquisition: SIM scan mode
Scan parameter: 20-300 amu
SIM Parameter: m/Z 93, 100 ms dwell time

**Table 1: Limonene content in DIPOLEN (Blend (A))**

| Sample | Limonen [mg/ kg] HS-SPME-GC-MS[1] |
|---|---|
| Dipolen S | 31.5±2.6 |
| [1]Headspace Solidphase Microextraction. Materials available from mtm plastics GmbH, according to 2018 specifications. | |

**Total free fatty acid content**

Fatty acid quantification was carried out using headspace solid phase micro-extraction (HS-SPME-GC-MS) by standard addition.

50 mg ground samples were weighed in 20 mL headspace vial and after the addition of limonene in different concentrations and a glass coated magnetic stir bar the vial was closed with a magnetic cap lined with silicone/PTFE. 10 µL Micro-capillaries were used to add diluted free fatty acid mix (acetic acid, propionic acid, butyric acid, pentanoic acid, hexanoic acid and octanoic acid) standards of known concentrations to the sample at three different levels. Addition of 0, 50, 100 and 500 ng equals 0 mg/kg, 1 mg/kg, 2 mg/kg and 10 mg/kg of each individual acid. For quantification ion 60 acquired in SIM mode was used for all acids except propanoic acid, here ion 74 was used.

GCMS Parameter:

Column: 20 m ZB Wax plus 0.25*0.25
Injector: Split 5:1 with glass lined split liner, 250°C
Temperature program: 40°C (1 min) @6°C/min to 120°C, @15°C to 245 °C (5 min)
Carrier: Helium 5.0, 40 cm/s linear velocity, constant flow
MS: Single quadrupole, direct interface, 220°C interface temperature
Acquisition: SIM scan mode
Scan parameter: 46-250 amu 6.6 scans/s
SIM Parameter: m/z 60,74, 6.6 scans/s

**Table 2: Total fatty acid content in Dipolen (Blend (A))**

| Sample | Total fatty acid concentration [mg/ kg][1] |
|---|---|
| Dipolen S | 70.6 |
| [1]The concentration of acetic acid, propionic acid, butyric acid, pentanoic acid, hexanoic acid octanoic acid, nonanoic acid and decanoic acid in each sample was added together to give a totally fatty acid concentration value. | |

Table 3: Results

| | | CE1 | CE2 | CE3 | CE4 | IE1 | IE2 | IE3 |
|---|---|---|---|---|---|---|---|---|
| DIPOLEN S (blend A) | wt.-% | 100 | 95 | 90 | 80 | 99.2 | 98.2 | 96.7 |
| Queo 8207 (comparative compatibilizer) | wt.-% | | 5 | 10 | 20 | | | |
| SCONA TPPP 1616 FA (compatibilizer B) | wt.-% | | | | | 0.5 | 1.5 | 3.0 |
| Irganox B225F | wt.-% | | | | | 0.3 | 0.3 | 0.3 |
| MFR (2.16 kg, 230 °C) | g/10min | 6 | 5.9 | 6.2 | 6.8 | 5.5 | 5.6 | 5.7 |
| Nominal tensile strain at break (ISO 527-1) | % | 110.9 | 230 | 286 | 434 | 70 | 69 | 68 |
| Tensile Modulus | MPa | 980 | 798 | 745 | 602 | 953 | 951 | 963 |
| Impact strength @ 23°C (ISO 189-1) | $kJ/m^2$ | 5.9 | 6.4 | 8.2 | 30.2 | 7.0 | 6.9 | 6.5 |

(continued)

| | | CE1 | CE2 | CE3 | CE4 | IE1 | IE2 | IE3 |
|---|---|---|---|---|---|---|---|---|
| Failure mode | | | C | C | P | | | |
| Impact strength @ -30°C | kJ/m$^2$ | 2.1 | | | | 1.8 | 1.8 | 1.8 |

As can be seen from the table, the inventive examples display improved impact properties over DIPOLEN S (CE1). Furthermore, the amount of compatibilizer required is far lower for the inventive examples (using the compatibilizer of the present invention) than for comparative examples CE2 to CE4 (using Queo 8207). Compare for example IE1 and CE2; an impact strength of 7.0 kJ/m$^2$ is observed for IE1, with the addition of just 0.5 wt.-% of compatibilizer, in comparison to CE2, which achieves an impact strength of 6.4 kJ/m$^2$ whilst using 5.0 wt.-% of compatibilizer. Consequently the tensile properties of the resulting composition are much improved (compare IE1 to IE3 with CE1 to CE3).

**Claims**

**1.** A polyolefin composition obtainable by blending

a) 96.0 to 99.7 wt.-% of a blend (A) comprising polypropylene, polyethylene, polystyrene, and limonene, having

A-1) a content of isotactic polypropylene of 30 - 70 wt.-% ,
A-2) a content of ethylene derived from polyethylene and ethylene containing copolymers of 20 - 50 wt.-%
A-3) 0.5 to 5.0 wt.-% of polystyrene,
A-4) 0 to 3.0 wt.-% stabilizers,
A-5) 0 to 4.0 wt.-% polyamide-6,
A-6) 0 to 3.0 wt.-% talc,
A-7) 0 to 3.0 wt.-% chalk,
A-8) 0 to 1.0 wt.-% paper,
A-9) 0 to 1.0 wt.-% wood,
A-10) 0 to 0.5 wt.-% metal,
A-11) 0.1 ppm to 100 ppm of limonene as determined by using solid phase microextraction (HS-SPME-GC-MS), and
A-12) 0 to 200 ppm total fatty acid content as determined by using solid phase microextraction (HS-SPME-GC-MS)
wherein all amounts are given with respect to the total weight of blend (A),
wherein blend (A) is a recycled material, which is recovered from a waste plastic material derived from post-consumer and/or post-industrial waste;
and wherein blend (A) has a melt flow rate (ISO 1133, 2.16 kg, 230°C) of 4.0 to 20.0 g/10min;
and

b) 0.3 to 4.0 wt.-% of a compatibilizer (B)

being a styrene-grafted polypropylene having
a melt flow rate (ISO 1133, 2.16 kg, 190°C) of 4.0 to 20.0 g/10min, and
three fractions when being subjected Preparative Temperature Rising Elution Fractionation (p-TREF) using TCB as eluent, in amounts of

| | |
|---|---|
| fraction (i) eluting up to 50°C | 5 to 15 wt.-% |
| fraction (ii) eluting from 50°C to 105°C | 5 to 15 wt.-% and |
| fraction (iii) eluting above 105°C | 70 to 90 wt.-%, |

whereby
fraction (i) has a polystyrene content as determined by $^1$H NMR in an amount of 50 to 70 wt-%;
and whereby
fraction (ii) has a polystyrene content as determined by $^1$H NMR in an amount of 1 to 10 wt-%;
and whereby

fraction (iii) has a polystyrene content as determined by $^1$H NMR in an amount of less than 5 wt-%, and whereby
the total polystyrene content as determined by $^1$H NMR of fractions (i) to (iii) is from 6 to 14 wt.-%, and whereby the polyolefin composition has a tensile modulus of at least 850 MPa (ISO 527-1,2) when measured on an injection molded test specimen.

**2.** The polyolefin composition according to claim 1, whereby the compatibilizer (B) has a total polystyrene content as determined by $^1$H NMR of fractions (i) to (iii) of 8 to 12 wt-% as determined by $^1$H NMR.

**3.** The polyolefin composition according to claim 1 or 2, whereby the compatibilizer (B) has a melt flow rate (ISO 1133, 2.16 kg, 190°C) of 8.0 to 16.0 g/10min.

**4.** The polyolefin composition according to any of the preceding claims, whereby the ratio of the melt flow rate (ISO 1133, 2.16 kg, 190°C) of the compatibilizer (B) to the melt flow rate of the blend (A) (ISO 1133, 2.16 kg, 230°C) MFR(B, (ISO 1133, 2.16 kg, 190°C) / MFR (A, ISO 1133, 2.16 kg, 230°C) is in the range of 0.5 to 2.0.

**5.** The polyolefin composition according to any of the preceding claims, whereby blend (A) has a content of limonene as determined by using solid phase microextraction (HS-SPME-GC-MS) of from 0.1 ppm to 50 ppm, more preferably from 0.1 ppm to 30 ppm, most preferably from 0.1 ppm to 10 ppm.

**6.** The polyolefin composition according to any of the preceding claims, whereby blend (A) has a content of fatty acids as determined by using solid phase microextraction (HS-SPME-GC-MS) of from 1 ppm to 150 ppm, more preferably from 2 ppm to 100 ppm, most preferably from 3 to 80 ppm.

**7.** The polyolefin composition according to any of the preceding claims having a melt flow rate (ISO 1133, 2.16 kg, 230°C) of 3.0 to 10.0 g/10min.

**8.** The polyolefin composition according to any of the preceding claims, whereby the fractions (i) to (iii) of compatibilizer (B) fulfill the following one or more criteria:

isotacticity of 30 to 60 mmmm% $^{13}$C NMR in fraction (i) eluting up to 50°C
and/or
isotacticity of 70 to 90 mmmm% $^{13}$C NMR in fraction (ii) eluting from 50°C to 105°C
and/or
isotacticity of 90 to 99 mmmm% $^{13}$C NMR in fraction (iii) eluting above 105°C

**9.** The polyolefin composition according to any of the preceding claims, having a Charpy Impact Strength (ISO 179-1; 1eA, 23°C) of more than 6.0 kJ/m$^2$ and up to 10.0 kJ/m$^2$.

**10.** An article, comprising the polyolefin composition according to any one of claims 1 to 9.

**11.** A process for preparing the polyolefin composition according to any one of claims 1 to 9, comprising the steps of

a) providing the blend (A) in an amount of 96.0 to 99.7 wt.-%, based on the overall weight of the polyolefin composition
b) providing the compatibilizer (B) in an amount of 0.3 to 4.0 wt.-%, based on the overall weight of the polyolefin composition
c) melting and mixing the blend of blend (A) and the compatibilizer (B) in an extruder, and
d) optionally pelletizing the obtained polyolefin composition.

**12.** A use of a compatibilizer (B) being a styrene-grafted polypropylene having

c) a melt flow rate (ISO 1133, 2.16 kg, 190°C) of 4.0 to 20 g/10min, and
d) three fractions when being subjected to preparative temperature rising elution fractionation (p-TREF) using TCB as eluent, in amounts of

| | |
|---|---|
| fraction (i) eluting up to 50°C | 5 to 15 wt.-% |
| fraction (ii) eluting from 50°C to 105°C | 5 to 15 wt.-% and |
| fraction (iii) eluting above 105°C | 70 to 90 wt.-%, |

whereby

fraction (i) has a polystyrene content as determined by $^1$H NMR in an amount of 50 to 70 wt-%; and whereby
fraction (ii) has a polystyrene content as determined by $^1$H NMR in an amount of 1 to 10 wt-%; and whereby
fraction (iii) has a polystyrene content as determined by $^1$H NMR in an amount of less than 5 wt-%, and whereby the total polystyrene content as determined by $^1$H NMR of fractions (i) to (iii) is from 6 to 14 wt.-%,
for blending with of a blend (A) comprising polypropylene, polyethylene, polystyrene, and limonene, having

A-1) a content of isotactic polypropylene of 30 - 70 wt.-%,
A-2) a content of ethylene derived from polyethylene and ethylene containing copolymers of 20 - 50 wt.-%,
A-3) 0.5 to 5.0 wt.-% of polystyrene,
A-4) 0 to 3.0 wt.-% stabilizers,
A-5) 0 to 4.0 wt.-% polyamide-6,
A-6) 0 to 3.0 wt.-% talc,
A-7) 0 to 3.0 wt.-% chalk,
A-8) 0 to 1.0 wt.-% paper,
A-9) 0 to 1.0 wt.-% wood,
A-10) 0 to 0.5 wt.-% metal,
A-11) 0.1 ppm to 100 ppm of limonene as determined by using solid phase microextraction (HS-SPME-GC-MS), and
A-12) 0 to 200 ppm total fatty acid content using solid phase microextraction (HS-SPME-GC-MS) wherein all amounts are given with respect to the total weight of blend (A)

wherein blend (A) is a recycled material, which is recovered from a waste plastic material derived from post-consumer and/or post-industrial waste; and wherein blend (A) has a melt flow rate (ISO 1133, 2.16 kg, 230°C) of 4 to 20 g/10min, to obtain an upgraded polyolefin composition.

**13.** Use according to claim 12, wherein the upgraded polyolefin composition has a tensile modulus of at least 850 MPa (ISO 527-1,2) and/or a Charpy Impact Strength (ISO 179-1; 1eA, 23°C) of more than 6.0 kJ/m$^2$ and up to 10 kJ/m$^2$.

## Patentansprüche

**1.** Polyolefinzusammensetzung, erhältlich durch Mischen

a) 96,0 bis 99,7 Gew.-% einer Mischung (A), die Polypropylen, Polyethylen, Polystyrol und Limonen umfasst, mit

A-1) einen Gehalt an isotaktischem Polypropylen von 30 bis 70 Gew.%,
A-2) einen Gehalt an Ethylen aus Polyethylen und ethylenhaltigen Copolymeren von 20 - 50 Gew.-%
A-3) 0,5 bis 5,0 Gew.-% Polystyrol,
A-4) 0 bis 3,0 Gew.-% Stabilisatoren,
A-5) 0 bis 4,0 Gew.-% Polyamid-6,
A-6) 0 bis 3,0 Gew.-% Talkum,
A-7) 0 bis 3,0 Gew.-% Kreide,
A-8) 0 bis 1,0 Gew.-% Papier,
A-9) 0 bis 1,0 Gew.-% Holz,
A-10) 0 bis 0,5 Gew.-% Metall,
A-11) 0,1 ppm bis 100 ppm Limonen, bestimmt durch Festphasenmikroextraktion (HS-SPME-GC-MS), und
A-12) 0 bis 200 ppm Gesamtfettsäuregehalt, bestimmt durch Festphasenmikroextraktion (HS-SPME-GC-MS)
wobei sich alle Mengenangaben auf das Gesamtgewicht der Mischung (A) beziehen,
wobei die Mischung (A) ein recyceltes Material ist, das aus einem Kunststoffabfallmaterial gewonnen wird, das aus post-consumer und/oder
post-industriellem Abfall stammt; und wobei die Mischung (A) eine Schmelzflussrate (ISO 1133, 2,16 kg, 230°C) von 4,0 bis 20,0 g/10min aufweist;
und

b) 0,3 bis 4,0 Gew.-% eines Kompatibilisator (B)
einem styrolgepfropften Polypropylen mit

eine Schmelzflussrate (ISO 1133, 2,16 kg, 190°C) von 4,0 bis 20,0 g/10min, und
drei Fraktionen bei der präparativen Fraktionierung mit steigender Temperatur (p-TREF) unter Verwendung von TCB als Elutionsmittel, in Mengen von

| | |
|---|---|
| Fraktion (i), die bis zu 50°C eluiert | 5 bis 15 Gew.-% |
| Fraktion (ii), welche von 50°C bis 105°C eluiert | 5 bis 15 Gew.-% und |
| Fraktion (iii), die über 105°C eluiert | 70 bis 90 Gew.-%, |

wobei
Fraktion (i) einen Polystyrolgehalt, bestimmt durch $^1$ H NMR, in Höhe von 50 bis 70 Gew.-% aufweist;
und wobei
Fraktion (ii) einen Polystyrolgehalt, bestimmt durch $^1$ H NMR, in einer Menge von 1 bis 10 Gew.-% aufweist;
und wobei
Fraktion (iii) einen Polystyrolgehalt, bestimmt durch $^1$ H NMR, von weniger als 5 Gew.-% aufweist, und wobei der Gesamtpolystyrolgehalt, bestimmt durch $^1$ H NMR der Fraktionen (i) bis (iii), 6 bis 14 Gew.-% beträgt, und wobei die Polyolefin-Zusammensetzung einen Zugmodul von mindestens 850 MPa (ISO 527-1,2) aufweist, wenn sie an einem spritzgegossenen Probekörper gemessen wird.

2. Polyolefinzusammensetzung nach Anspruch 1, wobei der Kompatibilisator (B) einen Gesamtpolystyrolgehalt, bestimmt durch $^1$ H NMR der Fraktionen (i) bis (iii), von 8 bis 12 Gew.-% aufweist, bestimmt durch $^1$ H NMR.

3. Polyolefinzusammensetzung nach Anspruch 1 oder 2, wobei der Kompatibilisator (B) eine Schmelzflussrate (ISO 1133, 2,16 kg, 190°C) von 8,0 bis 16,0 g/10min aufweist.

4. Polyolefinzusammensetzung nach einem der vorhergehenden Ansprüche, wobei das Verhältnis der Schmelzflussrate (ISO 1133, 2,16 kg, 190°C) des Kompatibilisators (B) zur Schmelzflussrate des Blends (A) (ISO 1133, 2,16 kg, 230°C)
MFR(B, (ISO 1133, 2,16 kg, 190°C) / MFR (A, ISO 1133, 2,16 kg, 230°C) im Bereich von 0,5 bis 2,0 liegt.

5. Polyolefinzusammensetzung nach einem der vorhergehenden Ansprüche, wobei die Mischung (A) einen Gehalt an Limonen, bestimmt durch Festphasenmikroextraktion (HS-SPME-GC-MS), von 0,1 ppm bis 50 ppm, bevorzugter von 0,1 ppm bis 30 ppm, am meisten bevorzugt von 0,1 ppm bis 10 ppm aufweist.

6. Polyolefinzusammensetzung nach einem der vorhergehenden Ansprüche, wobei die Mischung (A) einen Gehalt an Fettsäuren, bestimmt durch Festphasenmikroextraktion (HS-SPME-GC-MS), von 1 ppm bis 150 ppm, bevorzugter von 2 ppm bis 100 ppm, am meisten bevorzugt von 3 bis 80 ppm aufweist.

7. Polyolefinzusammensetzung nach einem der vorhergehenden Ansprüche mit einer Schmelzflussrate (ISO 1133, 2,16 kg, 230°C) von 3,0 bis 10,0 g/10min.

8. Polyolefinzusammensetzung nach einem der vorhergehenden Ansprüche, wobei die Fraktionen (i) bis (iii) des Kompatibilisator (B) die folgenden ein oder mehreren Kriterien erfüllen:

Isotaktizität von 30 bis 60 mmmm% $^{13}$ C NMR in Fraktion (i), die bis zu 50°C eluiert
und/oder
Isotaktizität von 70 bis 90 mmmm% $^{13}$ C NMR in Fraktion (ii), die von 50°C bis 105°C eluiert

und/oder
Isotaktizität von 90 bis 99 mmmm% $^{13}C$ NMR in Fraktion (iii), die über 105°C eluiert

**9.** Polyolefinzusammensetzung nach einem der vorhergehenden Ansprüche mit einer Charpy-Schlagzähigkeit (ISO 179-1; 1eA, 23°C) von mehr als 6,0 kJ/$m^2$ und bis zu 10,0 kJ/$m^2$.

**10.** Gegenstand, umfassend die Polyolefinzusammensetzung nach einem der Ansprüche 1 bis 9.

**11.** Verfahren zur Herstellung der Polyolefin-Zusammensetzung nach einem der Ansprüche 1 bis 9, umfassend die Schritte

a) Bereitstellung des Blends (A) in einer Menge von 96,0 bis 99,7 Gew.-%, bezogen auf das Gesamtgewicht der Polyolefin-Zusammensetzung
b) Bereitstellung des Kompatibilisator (B) in einer Menge von 0,3 bis 4,0 Gew.-%, bezogen auf das Gesamtgewicht der Polyolefin-Zusammensetzung
c) Schmelzen und Mischen der Mischung aus Blend (A) und dem Kompatibilisator (B) in einem Extruder, und
d) gegebenenfalls Granulierung der erhaltenen Polyolefin-Zusammensetzung.

**12.** Verwendung eines Kompatibilisator (B), das ein mit Styrol gepfropftes Polypropylen ist, das

a) eine Schmelzflussrate (ISO 1133, 2,16 kg, 190°C) von 4,0 bis 20 g/10min, und
b) drei Fraktionen, die einer präparativen Elutionsfraktionierung mit ansteigender Temperatur (p-TREF) unter Verwendung von TCB als Elutionsmittel unterzogen wurden, in Mengen von

| | |
|---|---|
| Fraktion (i), die bis zu 50°C eluiert | 5 bis 15 Gew.-% |
| Fraktion (ii), die von 50°C bis 105°C eluiert | 5 bis 15 Gew.-% und |
| Fraktion (iii), die über 105°C eluiert | 70 bis 90 Gew.-%, |

wobei

Fraktion (i) einen Polystyrolgehalt, bestimmt durch $^{1}H$ NMR, in Höhe von 50 bis 70 Gew.-% aufweist;
und wobei
Fraktion (ii) einen Polystyrolgehalt, bestimmt durch $^{1}H$ NMR, in einer Menge von 1 bis 10 Gew.-% aufweist;
und wobei
Fraktion (iii) einen Polystyrolgehalt, bestimmt durch $^{1}H$ NMR, von weniger als 5 Gew.-% aufweist, und wobei der Gesamtpolystyrolgehalt, bestimmt durch $^{1}H$ NMR der Fraktionen (i) bis (iii), 6 bis 14 Gew.-% beträgt,
zum Mischen mit einer Mischung (A), die Polypropylen, Polyethylen, Polystyrol und Limonen umfasst, mit

A-1) einen Gehalt an isotaktischem Polypropylen von 30 - 70 Gew.-%,
A-2) einen Gehalt an Ethylen aus Polyethylen und ethylenhaltigen Copolymeren von 20 - 50 Gew.-%,
A-3) 0,5 bis 5,0 Gew.-% Polystyrol,
A-4) 0 bis 3,0 Gew.-% Stabilisatoren,
A-5) 0 bis 4,0 Gew.-% Polyamid-6,
A-6) 0 bis 3,0 Gew.-% Talkum,
A-7) 0 bis 3,0 Gew.-% Kreide,
A-8) 0 bis 1,0 Gew.-% Papier,
A-9) 0 bis 1,0 Gew.-% Holz,
A-10) 0 bis 0,5 Gew.-% Metall,
A-11) 0,1 ppm bis 100 ppm Limonen, bestimmt durch Festphasenmikroextraktion (HS-SPME-GC-MS), und
A-12) 0 bis 200 ppm Gesamtfettsäuregehalt unter Verwendung der Festphasenmikroextraktion (HS-SPME-GC-MS), wobei alle Mengenangaben in Bezug auf das Gesamtgewicht der Mischung (A) erfolgen

wobei die Mischung (A) ein recyceltes Material ist, das aus einem Kunststoffabfallmaterial gewonnen wird, das aus Post-Consumer- und/oder Post-Industrial-Abfall stammt; und wobei die Mischung (A) eine Schmelzflussrate (ISO 1133, 2,16 kg, 230°C) von 4 bis 20 g/10min aufweist,
um eine veredelte Polyolefin-Zusammensetzung zu erhalten.

**13.** Verwendung nach Anspruch 12, wobei die veredelte Polyolefinzusammensetzung einen Zugmodul von mindestens 850 MPa (ISO 527-1,2) und/oder eine Charpy-Schlagzähigkeit (ISO 179-1; 1eA, 23°C) von mehr als 6,0 kJ/$m^2$ und bis zu 10 kJ/$m^2$ aufweist.

**Revendications**

**1.** Composition de polyoléfine pouvant être obtenue par mélange de

a) 96,0 à 99,7 % en poids d'un mélange (A) comprenant du polypropylène, du polyéthylène, du polystyrène, et du limonène, ayant

A-1) une teneur en polypropylène isotactique de 30 à 70 % en poids,
A-2) une teneur en éthylène dérivé de polyéthylène et copolymères contenant de l'éthylène de 20 à 50 % en poids,
A-3) 0,5 à 5,0 % en poids de polystyrène,
A-4) 0 à 3,0 % en poids de stabilisants,
A-5) 0 à 4,0 % en poids de polyamide-6,
A-6) 0 à 3,0 % en poids de talc,
A-7) 0 à 3,0 % en poids de craie,
A-8) 0 à 1,0 % en poids de papier,
A-9) 0 à 1,0 % en poids de bois,
A-10) 0 à 0,5 % en poids de métal,
A-11) 0,1 ppm à 100 ppm de limonène, telles que déterminées par utilisation d'une microextraction en phase solide (HS-SPME-GC-MS), et
A-12) 0 à 200 ppm d'acides gras totaux, telles que déterminées par utilisation d'une microextraction en phase solide (HS-SPME-GC-MS)
dans laquelle toutes les quantités sont indiquées par rapport au poids total du mélange (A),
dans laquelle le mélange (A) est un matériau recyclé, qui est récupéré à partir de matières plastiques de rebut dérivées de déchets post-consommation et/ou postindustriels ;
et dans laquelle le mélange (A) a un indice de fluage (ISO 1133, 2,16 kg, 230°C) de 4,0 à 20,0 g/10 min, et

b) 0,3 à 4,0 % en poids d'un agent de compatibilité (B) qui est un polypropylène greffé de styrène ayant un indice de fluage (ISO 1133, 2,16 kg, 190°C) de 4,0 à 20,0 g/10 min, et
trois fractions quand il est soumis à un fractionnement préparatif par élution analytique avec augmentation de la température (p-TREF), utilisant du TCB en tant qu'éluant, en des quantités de
fraction (i) s'éluant jusqu'à 50°C 5 à 15 % en poids fraction (ii) s'éluant de 50°C à 105°C 5 à 15 % en poids et fraction (iii) s'éluant à plus de 105°C 70 à 90 % en poids dans laquelle
la fraction (i) a une teneur en polystyrène, telle que déterminée par RMN-$^1$H, en une quantité de 50 à 70 % en poids ;
et dans laquelle
la fraction (ii) a une teneur en polystyrène, telle que déterminée par RMN-$^1$H, en une quantité de 1 à 10 % en poids ;
et dans laquelle
la fraction (iii) a une teneur en polystyrène, telle que déterminée par RMN-$^1$H, en une quantité de 5 % en poids, et dans laquelle la teneur totale en polystyrène, telle que déterminée par RMN-$^1$H, des fractions (i) à (iii), est de 6 à 14 % en poids,
et dans laquelle la composition de polyoléfine a un module de traction d'au moins 850 MPa (ISO 527-1,2) quand il est mesuré sur une éprouvette moulée par injection.

**2.** Composition de polyoléfine selon la revendication 1, dans laquelle l'agent de compatibilité (B) a une teneur totale en polystyrène, telle que déterminée par RMN-$^1$H, des fractions (i) à (iii), de 8 à 12 % en poids tels que déterminés par RMN-$^1$H.

**3.** Composition de polyoléfine selon la revendication 1 ou 2, dans laquelle l'agent de compatibilité (B) a un indice de fluage (ISO 1133, 2,16 kg, 190°C) de 8,0 à 16,0 g/10 min.

**4.** Composition de polyoléfine selon l'une quelconque des revendications précédentes, dans laquelle le rapport de l'indice de fluage (ISO 1133, 2,16 kg, 190°C) de l'agent de compatibilité (B) sur l'indice de fluage du mélange (A) (ISO 1133, 2,16 kg, 230°C), MFR (B, (ISO 1133, 2,16 kg, 190°C) / MFR (A, ISO 1133, 2,16 kg, 230°C) est dans la plage de 0,5 à 2,0.

**5.** Composition de polyoléfine selon l'une quelconque des revendications précédentes, dans laquelle le mélange (A) a une teneur en limonène, telle que déterminée par utilisation d'une microextraction en phase solide (HS-SPME-GC-MS), de 0,1 ppm à 50 ppm, plus préférablement de 0,1 ppm à 30 ppm, le plus préférablement de 0,1 ppm à 10 ppm.

**6.** Composition de polyoléfine selon l'une quelconque des revendications précédentes, dans laquelle le mélange (A) a une teneur en acides gras, telle que déterminée par utilisation d'une microextraction en phase solide (HS-SPME-GC-MS), de 1 ppm à 150 ppm, plus préférablement de 2 ppm à 100 ppm, le plus préférablement de 3 à 80 ppm.

**7.** Composition de polyoléfine selon l'une quelconque des revendications précédentes, ayant un indice de fluage (ISO 1133, 2,16 kg, 230°C) de 3,0 à 10,0 g/10 min.

**8.** Composition de polyoléfine selon l'une quelconque des revendications précédentes, dans laquelle les fractions (i) à (iii) de l'agent de compatibilité (B) satisfont à un ou plusieurs des critères suivants :

isotacticité de 30 à 60 % mmmm par RMN-$^{13}$C dans la fraction (i) s'éluant jusqu'à 50°C, et/ou
isotacticité de 70 à 90 % mmmm par RMN-$^{13}$C dans la fraction (ii) s'éluant de 50°C à 105°C, et/ou
isotacticité de 90 à 99 % mmmm par RMN-$^{13}$C dans la fraction (iii) s'éluant à plus de 105°C.

**9.** Composition de polyoléfine selon l'une quelconque des revendications précédentes, ayant une résistance au choc Charpy (ISO 179-1 ; 1eA, 23°C) supérieure à 6,0 kJ/m$^2$ et allant jusqu'à 10,0 kJ/m$^2$.

**10.** Article comprenant la composition de polyoléfine selon l'une quelconque des revendications 1 à 9.

**11.** Procédé pour préparer la composition de polyoléfine selon l'une quelconque des revendications 1 à 9, comprenant les étapes de

a) obtention du mélange (A) en une quantité de 96,0 à 99,7 % en poids basés sur le poids global de la composition de polyoléfine
b) obtention de l'agent de compatibilité (B) en une quantité de 0,3 à 4,0 % en poids basés sur le poids global de la composition de polyoléfine
c) fusion et mélange du mélange du mélange (A) et de l'agent de compatibilité (B) dans une extrudeuse, et
d) optionnellement pastillage de la composition de polyoléfine obtenue.

**12.** Utilisant d'un agent de compatibilité (B) qui est un polypropylène greffé de styrène ayant

c) un indice de fluage (ISO 1133, 2,16 kg, 190°C) de 4,0 à 20 g/10 min, et
d) trois fractions quand il est soumis à un fractionnement préparatif par élution analytique avec augmentation de la température (p-TREF), utilisant du TCB en tant qu'éluant, en des quantités de
fraction (i) s'éluant jusqu'à 50°C 5 à 15 % en poids fraction (ii) s'éluant de 50°C à 105°C 5 à 15 % en poids et fraction (iii) s'éluant à plus de 105°C 70 à 90 % en poids dans laquelle
la fraction (i) a une teneur en polystyrène, telle que déterminée par RMN-$^1$H, en une quantité de 50 à 70 % en poids ;
et dans laquelle
la fraction (ii) a une teneur en polystyrène, telle que déterminée par RMN-$^1$H, en une quantité de 1 à 10 % en poids ;
et dans laquelle
la fraction (iii) a une teneur en polystyrène, telle que déterminée par RMN-$^1$H, en une quantité de 5 % en poids, et dans laquelle
la teneur totale en polystyrène, telle que déterminée par RMN-$^1$H, des fractions (i) à (iii), est de 6 à 14 % en poids,

pour un mélange avec un mélange (A) comprenant du polypropylène, du polyéthylène, du polystyrène, et du limonène, ayant

A-1) une teneur en polypropylène isotactique de 30 à 70 % en poids,
A-2) une teneur en éthylène dérivé de polyéthylène et copolymères contenant de l'éthylène de 20 à 50 % en poids,
A-3) 0,5 à 5,0 % en poids de polystyrène,
A-4) 0 à 3,0 % en poids de stabilisants,
A-5) 0 à 4,0 % en poids de polyamide-6,
A-6) 0 à 3,0 % en poids de talc,
A-7) 0 à 3,0 % en poids de craie,
A-8) 0 à 1,0 % en poids de papier,
A-9) 0 à 1,0 % en poids de bois,
A-10) 0 à 0,5 % en poids de métal,
A-11) 0,1 ppm à 100 ppm de limonène, telles que déterminées par utilisation d'une microextraction en phase solide (HS-SPME-GC-MS), et
A-12) 0 à 200 ppm d'acides gras totaux, telles que déterminées par utilisation d'une microextraction en phase solide (HS-SPME-GC-MS)
dans laquelle toutes les quantités sont indiquées par rapport au poids total du mélange (A),
dans laquelle le mélange (A) est un matériau recyclé, qui est récupéré à partir de matières plastiques de rebut dérivées de déchets post-consommation et/ou postindustriels ;
et dans laquelle le mélange (A) a un indice de fluage (ISO 1133, 2,16 kg, 230°C) de 4,0 à 20,0 g/10 min,

pour que soit obtenue une composition de polyoléfine améliorée.

**13.** Utilisation selon la revendication 12, dans laquelle la composition de polyoléfine améliorée a un module de traction d'au moins 850 MPa (ISO 527-1,2) et une résistance au choc Charpy (ISO 179-1 ; 1eA, 23°C) supérieure à 6,0 kJ/$m^2$ et allant jusqu'à 10,0 kJ/$m^2$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **AKOVALI, GÜNERI et al.** Frontiers in the science and technology of polymer recycling. Springer Science & Business Media, 2013
- **KARIAN, HARUTUN.** Handbook of polypropylene and polypropylene composites, revised and expanded. CRC press, 2003
- **SUN, YI-JUN et al.** In situ compatibilization of polyolefin and polystyrene using Friedel-Crafts alkylation through reactive extrusion. *Polymer,* 1998, vol. 39 (11), 2201-2208
- *CHEMICAL ABSTRACTS,* 6683-19-8
- *CHEMICAL ABSTRACTS,* 31570-04-4
- *CHEMICAL ABSTRACTS,* 693- 36-7
- *CHEMICAL ABSTRACTS,* 11097-59-9
- *CHEMICAL ABSTRACTS,* 1592-23-0
- *CHEMICAL ABSTRACTS,* 557-05-1
- *CHEMICAL ABSTRACTS,* 60676-86-0
- *CHEMICAL ABSTRACTS,* 7631-86-9
- *CHEMICAL ABSTRACTS,* 112926-00-8
- *CHEMICAL ABSTRACTS,* 1318-74-7
- *CHEMICAL ABSTRACTS,* 1344-00-9
- *CHEMICAL ABSTRACTS,* 92704-41-1
- *CHEMICAL ABSTRACTS,* 1327-36-2
- *CHEMICAL ABSTRACTS,* 1344-95-2
- *CHEMICAL ABSTRACTS,* 1344-01-0
- *CHEMICAL ABSTRACTS,* 52829-07-9
- *CHEMICAL ABSTRACTS,* 1843-05-6
- *CHEMICAL ABSTRACTS,* 532-32-1
- *CHEMICAL ABSTRACTS,* 135861-56-2
- *CHEMICAL ABSTRACTS,* 97593-29-8
- *CHEMICAL ABSTRACTS,* 71786-60-2
- *CHEMICAL ABSTRACTS,* 204-393-1
- **ORTIN A. ; MONRABAL B. ; SANCHO-TELLO J.** *Macromol. Symp.,* 2007, vol. 257, 13-28
- **A. ORTIN ; B. MONRABAL ; J. MONTESINOS ; P. DEL HIERRO.** *Macromol. Symp.,* 2009, vol. 282, 65-70
- Fractionation. **SOARES, J.B.P.** Encyclopedia Of Polymer Science and Technology. John Wiley & Sons, 2001, vol. 10, 75-131
- *CHEMICAL ABSTRACTS,* 128-37-0
- **BRANDOLINI, ANITA J. ; HILLS, DEBORAH D.** NMR spectra of polymers and polymer additives. CRC press, 2000
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromolecules,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128